# EUROPÄISCHE PATENTSCHRIFT

(11) **EP 1 076 458 B1**
(45) Veröffentlichungstag und Bekanntmachung des Hinweises auf die Patenterteilung: **06.04.2005**
(21) Anmeldenummer: 00115642.1
(22) Anmeldetag: 20.07.2000
(51) Int. Cl.: H04N 7/20, H04H 1/00

(54) **Twin-Konverter**
Twin converter
Biconvertisseur

(30) Priorität: 12.08.1999 DE 29914050 U
(43) Veröffentlichungstag der Anmeldung: 14.02.2001
(73) Patentinhaber: Kathrein-Werke KG, 83022 Rosenheim (DE)
(72) Erfinder: Exler, Ralf, 83059 Kolbermoor (DE)
(74) Vertreter: Flach, Dieter Rolf Paul, Dipl.-Phys.

(56) Entgegenhaltungen:
- DE-A- 19 543 717
- DE-U- 29 716 786
- MANN U: "FUNKSCHAU,DE,FRANZIS-VERLAG K.G. MUNCHEN" , FUNKSCHAU,DE,FRANZIS-VERLAG K.G. MUNCHEN, VOL. 67, NR. 1, PAGE(S) 82-85 XP000494872 ISSN: 0016-2841 * das ganze Dokument *

## Beschreibung

Die Erfindung betrifft einen Twin-Konverter nach dem Oberbegriff des Anspruchs 1.

Twin-Konverter ermöglichen nicht nur einem, sondern zwei angeschlossenen Teilnehmern unabhängig voneinander beispielsweise das über ASTRA-Satelliten ausgestrahlte breitbandige Signal-Programmangebot zu empfangen, da der von dort ausgestrahlte Frequenzbereich von 10,7 bis 12,75 GHz von jedem der beiden Teilnehmer unabhängig empfangen werden kann. Dazu sind derartige Twin-Receiver mit zwei Lokaloszillatoren bzw. zwei Lokaloszillator-Frequenzen betreibbar, die es ermöglichen, sowohl das untere vom Satelliten ausgestrahlte Frequenzband als auch das obere ausgestrahlte Frequenzband in einen sich überlappenden für die angeschlossenen Receiver empfangbaren Zwischenfrequenz-Bereich (ZF-Bereich) umzusetzen.

Von daher kann jeder der beiden an einem derartigen Twin-Receiver angeschlossenen Teilnehmer unabhängig wählen, ob er über vertikal oder horizontal polarisierte Signale ausgestrahlte Programme in einem unteren oder oberen Frequenzbandbereich empfangen will. Die Umschaltung erfolgt dabei bekanntermaßen in Form eines Spannungspegels-Umschaltsignals von beispielsweise 13 oder 14 Volt auf 18 Volt und durch Einspeisung eines Tonsignals von beispielsweise 0 kHz oder 22 kHz.

Eine derartige Empfangsanlage und Einsatz eines Twin-Konverters lässt sich dann allerdings nur sehr eingeschränkt zu einer Gemeinschaftsantennenanlage ausbauen, bei der beispielsweise vier oder mehr als vier angeschlossene Teilnehmer mit der Zwischenschaltung von einer oder mehreren kaskadierten Schaltmatrixanordnung unabhängig voneinander Programme empfangen können. In einem derartigen Fall könnten nur zwei Bereichsebenen empfangen werden, wenn nämlich beispielsweise an einem Ausgang des Konverters die vertikal polarisierten Programme im unteren Frequenzband und am anderen Ausgang die horizontal polarisierten Programme ebenfalls des unteren Frequenzbandes anstehen.

Von daher ist bereits ein Twin-Konverter vorgeschlagen worden, der im normalen Twin-Betrieb nur den Empfang von zwei Empfangsbereichsebenen erlaubt, nämlich beispielsweise den unabhängigen Empfang der vertikal oder horizontal polarisierten Signale im unteren Frequenzbandbereich. Damit waren die analogen Programme, nicht aber die im oberen Frequenzband ausgestrahlten digitalen Programme empfangbar.

Ein derartiger Konverter konnte jedoch zu einem Breitbandspeisesystem für eine Gemeinschaftsantennenanlage ausgebaut werden, beispielsweise durch Nachschaltung einer Satelliten-Bereichsweiche mit einem Umsetzer. An den dadurch gebildeten vier Ausgängen stehen in fester Zuordnung das vertikale untere, das horizontale untere, das vertikale obere und das horizontale obere Frequenzband-Spektrum zum Empfang an, so dass durch Nachschaltung einer oder mehrerer kaskadierter Umschalt-Matrixschaltungen vier oder mehr als vier Teilnehmer unabhängig voneinander das gesamte Frequenzspektrum empfangen konnten.

Die zuletzt genannte Lösung weist gegenüber der eingangs genannten Lösung den Vorteil auf, dass ein derartiger Twin-Konverter auch beim Ausbau zu einer Gemeinschaftsantennenanlage noch einsetzbar ist. Dies ist allerdings mit dem Nachteil verbunden, dass im Twin-Betrieb nur ein eingeschränktes Frequenzband-Spektrum, nämlich beispielsweise nur das analoge Frequenzangebot im unteren Frequenzbandbereich empfangbar ist.

Aufgabe der vorliegenden Erfindung ist es einen demgegenüber verbesserten Konverter zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Mit der erfindungsgemäßen Lösung wird ein Twin-Konverter zur Verfügung gestellt, der es jedem von zwei angeschlossenen Teilnehmern erlaubt alle vier Bereichsebenen zu empfangen. Gleichwohl kann der erfindungsgemäße Twin-Konverter auch zu einem breitbandigen Speisesystem für eine Gemeinschaftsantennenanlage erweitert werden, ohne dass eine neue Konverter-Schaltungsanordnung benötigt wird.

Erfindungsgemäß wird dies dadurch realisiert, dass bezüglich der beiden bei einem herkömmlichen Twin-Konverter empfangbaren unteren Frequenzbänder an jedem Ausgang zumindest eine das untere Frequenzband umfassende Polarisation nicht schmalbandig sondern breitbandig ansteht. Anstelle eines schmalbandigen unteren vertikalen Frequenzbandes am einen Ausgang steht beispielsweise ein das gesamte Frequenzspektrum in der ZF-Ebene umfassendes breitbandiges Signal entsprechend der empfangenen vertikalen Polarisationen an. An dem jeweils zweiten Ausgang steht dann anstelle des schmalbandigen unteren Frequenzbandes bezüglich der horizontalen Polarisation ein entsprechend breitbandiges Signal im Hinblick auf die empfangenen horizontalen Polarisationen an, das das untere und obere Frequenzband umfasst.

Während also das obere und untere Frequenzband ansonsten in der ZF-Frequenzebene beispielsweise auf 950 MHz bis 1950 MHz bzw. auf 1100 MHz bis 2100 MHz umgesetzt wird, beinhaltet die breitbandige Umsetzung an dem einen oder anderen Ausgang einmal für das vertikale und das horizontale Empfangssignal eine breitbandige Umsetzung von beispielsweise 950 MHz bis 3000 MHz.

Im Twin-Betrieb kann das obere Frequenz-Spektrum dieses Breitbandsignals nicht empfangen werden, was jedoch ohne Bedeutung ist, da durch eine entsprechende Umschaltung dieser obere Frequenzbandbereich durch Umschaltung in eine andere Empfangsbereichsebene in den üblichen Bereich von beispielsweise 1100 MHz bis 2100 MHz umgesetzt wird und darüber empfangbar ist.

Die breitbandige Auslegung des Twin-Konverters erlaubt dann aber eine problemlose Erweiterung zu einer breitbandigen Gemeinschaftsantennenanlage, in der dann beide Ausgänge so voreingestellt werden, dass an einem Ausgang das breitbandige vertikale und am anderen Ausgang das breitbandige horizontale Signal anliegt.

In einer bevorzugten Ausführungsform der Erfindung wird das für den Gemeinschaftsantennenbetrieb benötigte breitbandige Ausgangssignal einmal bezüglich der vertikalen und einmal bezüglich der horizontalen empfangenen Polarisationen bereits dann automatisch angelegt, wenn nur an einem Ausgang eine entsprechende Versorgungsspannung bereitgestellt wird, also bereits dann, wenn an dem anderen Ausgang 0 Volt anliegen.

Die Erfindung wird nachfolgend anhand eines Ausführungsbeispiels erläutert. Dabei zeigen im einzelnen:
- Figur 1 :: eine schematische Satellitenempfangsanlage für den Twin-Betrieb; und
- Figur 2: eine entsprechend erweiterte Anlage für eine Gemeinschaftsantennenanlage.

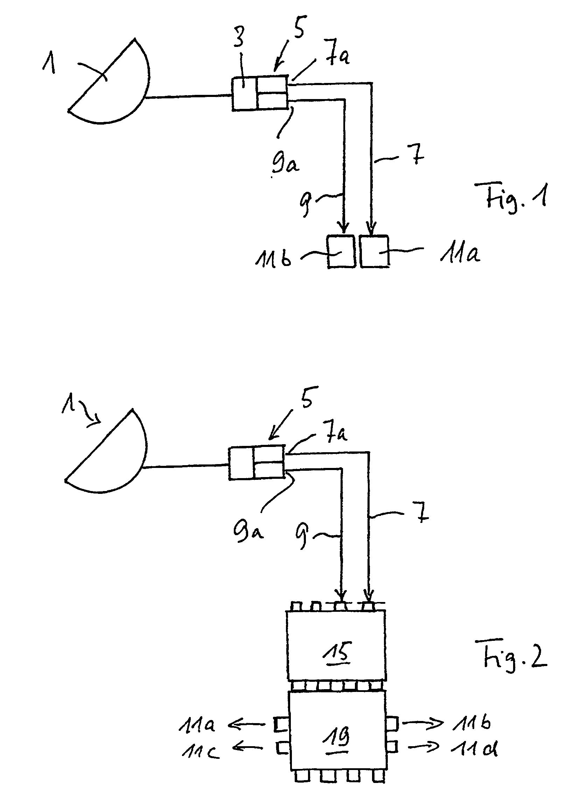

In Figur 1 ist in schematischer Darstellung eine Satellitenantenne mit einem Speisesystem 3 und einem nachgeschalteten Twin-Konverter 5 gezeigt, an dessen beiden Ableitungen 7 und 9 im Twin-Betrieb jeweils ein Teilnehmer 11a und 11b angeschlossen sind.

Mit einer derartigen Anlage können beispielsweise die vertikalen und horizontalen Polarisationen des von einem Satelliten und von einer Satellitengruppe ausgestrahlten Frequenzspektrums von 10,7 bis 12,75 GHz empfangen werden, wobei das Frequenzband von 10,7 bis 11,7 GHz beispielsweise auch als unteres Frequenzband und der anschließende Bereich von 11,7 bis 12,75 GHz auch als oberes Frequenzband bezeichnet werden kann.

Die Umschaltung zwischen den vier Frequenzbandbereichen erfolgt von jedem der beiden Teilnehmer 11a, 11b durch eine von seinem Empfänger über die Ableitungen 7 oder 9 der Ausgänge 7a und 9a des Twin-Konverters zugeführte Speisespannung, beispielsweise in Höhe von 13 Volt bzw. 18 Volt. Der niedrige Spannungspegel kann beispielsweise als Umschaltspannung zum Empfang der vertikalen Polarisation und der höhere Spannungspegel beispielsweise als Umschaltsignal zum Empfang der horizontalen Polarisationen dienen. Eine Umschaltung vom unteren zum oberen Frequenzbanbereich kann beispielsweise durch Umschaltung von 0 kHz auf einen Schaltton von 22 kHz vorgenommen werden.

Der erfindungsgemäße Twin-Konverter weist aber nunmehr folgende Empfangsbereiche in Abhängigkeit folgender Schaltsignale auf, die in der nachstehenden Tabelle wiedergegeben sind:

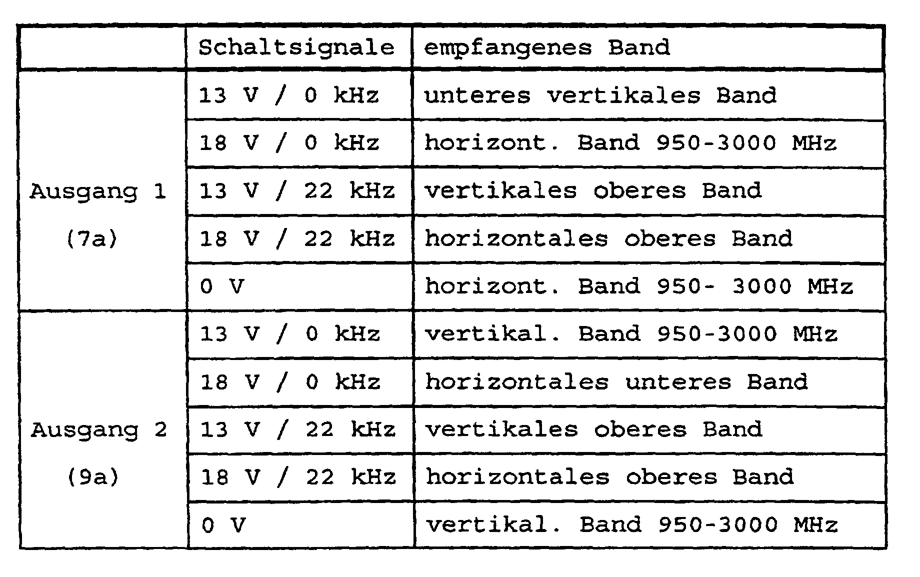

Daraus ist also ersichtlich, dass bei herkömmlichen Twin-Konvertern durch Umschaltung zwischen 13 V auf 18 V und 0 kHz auf 22 kHz die vier unterschiedlichen Frequenzbandbereiche ausgewählt werden können, wobei am ersten Ausgang 7a ein unteres Frequenzband, im gezeigten Ausführungsbeispiel das untere horizontale Frequenzband nicht schmalbandig nur zum Empfang der Frequenzen von 950 bis beispielsweise 1950 MHz, sondern breitbandig zum Empfang des gesamten Frequenzspektrums in der ZF-Ebene von 950 bis 3000 MHz ausgelegt ist.

Entsprechend ist eine Empfangsebene, nämlich die komplementäre Empfangsebene zum Empfang der vertikalen unteren Polarisation am anderen Ausgang ebenfalls nicht schmalbandig, sondern breitbandig ausgelegt und umfasst das in die ZF-Ebene umgesetzte gesamte empfangene Frequenzspektrum von 950 bis 3000 MHz.

Im normalen Betrieb, wenn beispielsweise der am Ausgang 7 angeschlossene Teilnehmer 11a als Steuerungssignal 18 V / 0 kHz eingegeben hat, also das breitbandige Signal von 950 bis 3000 MHz am Ausgang 7 des Twin-Receivers ansteht, entspricht dies dem Empfang des unteren horizontalen Frequenzbandes. Der obere Frequenzbandbereich in der ZF-Ebene ist für ihn in dieser Einstellung nicht empfangbar. Will er den oberen Frequenzbandbereich der horizontalen Polarisation empfangen, so muss er auf 18 V / 22 kHz umschalten, da dann das obere Frequenzband in der ZF-Frequenzebene beispielsweise bei 1100 MHz bis 2150 MHz ansteht, also vom Teilnehmer empfangen werden kann.

Wird gemäß Figur 2 ein derartiger Twin-Receiver unter Nachschaltung einer Satelliten-Bereichsweiche mit einem Umsetzer und einer zumindest ersten Schaltmatrix gemäß Figur 2 erweitert, so ist es nur erforderlich, dass an einem Ausgang des Twin-Konverters das breitbandige Signal zum Empfang der vertikalen und am anderen Ausgang das breitbandige Signal zum Empfang der horizontalen Polarisationen fest ansteht. Dies kann durch eine der aus der vorstehenden Tabelle ersichtlichen Schalteinstellung vorgenommen werden, wobei es nur erforderlich ist, dass an einem Ausgang eine entsprechende Speisespannung zum Betrieb des Twin-Konverters eingespeist wird und im anderen Ausgang 0 Volt anliegen.

Durch die in Figur 2 wiedergegebene SAT-Bereichsweiche mit Umsetzer 15 liegt nunmehr an den dort gebildeten vier Ausgängen fest definiert jeweils ein Signal zum Empfangen des unteren bzw. oberen vertikalen oder horizontalen Empfangsbereiches an, so dass durch Nachschaltung einer Umschaltmatrix 19 nunmehr jeder der dort angeschlossenen Teilnehmer unabhängig voneinander alle vier Satellitenempfangsbereiche empfangen kann.

## Patentansprüche

1. Twin-Konverter mit den folgenden Merkmalen
- an den beiden Ausgängen (7a, 9a) können zwei Teilnehmer (11a, 11b) unabhängig voneinander zumindest vier Empfangsbereiche empfangen, nämlich zum einen die vertikal und zum anderen die horizontal polarisierten Signale einmal in einem unteren und zum anderen in einem oberen Frequenzbandbereich, **gekennzeichnet durch** die folgenden weiteren Merkmale
- der Twin-Konverter ist zu einer breitbandigen Gemeinschaftsantennenanlage erweiterbar, über die für mehrere anschließbare Teilnehmer (11) unabhängig voneinander sowohl das untere sowie das obere zum einen vertikal und zum anderen horizontal polarisierte Frequenzspektrum empfangbar ist,
- der Twin-Konverter (5) ist so aufgebaut, dass im Twin-Betrieb an dessen einem Ausgang (7a) bezüglich einer der vier empfangbaren Bereichsebenen nicht nur das vertikale untere, sondern das gesamte vertikale breitbandige Frequenzbandspektrum ansteht und am anderen Ausgang (9a) bezüglich einer der vier empfangbaren Bereichsebenen nicht nur das horizontale untere, sondern das gesamte horizontale breitbandige Frequenzbandspektrum ansteht, und
- im breitbandigen Gemeinschaftsantennenanlagenbetrieb ist der Twin-Konverter (5) so einstellbar, dass an seinem einen Ausgang (7a) das breitbandige Frequenzbandspektrum zum Empfang der vertikalen und am anderen Ausgang (9a) das breitbandige Frequenzbandspektrum zum Empfang der horizontalen Polarisation ansteht.

2. Konverter nach Anspruch 1, **dadurch gekennzeichnet, dass** im breitbandigen Gemeinschaftsantennenanlagenbetrieb eine Energieversorgung des Twin-Konverters über nur einen Ausgang (7a oder 9a) ausreichend ist und das breitbandige vertikale bzw. breitbandige horizontale Ausgangssignal am betreffenden Ausgang (7a, 9a) auch dann anliegt, wenn an dem jeweils anderen Ausgang eine (9a, 7a) 0 Volt Schaltspannung anliegt.

## Claims

1. Twin converter having the following features:
- two subscribers (11a, 11b) can receive at least four reception areas independently of one another at the two outputs (7a, 9a), specifically on the one hand the vertically polarized signals and on the other hand the horizontally polarized signals, and on one hand in a lower frequency band range and on the other hand in an upper frequency band range, **characterized by** the following further features:
- the twin converter can be upgraded to a broadband community antenna system, via which both the lower and the upper on the one hand vertically polarized and on the other hand horizontally polarized frequency spectrum can be received independently of one another for two or more subscribers (11) who can be connected,
- the twin converter (5) is designed such that, in the twin mode, not only the vertical lower broadband frequency band spectrum but the entire vertical broadband frequency spectrum is produced at one of its outputs (7a) with respect to one of the four receivable area levels, and not only the horizontal lower broadband frequency band spectrum but also the entire horizontal broadband frequency band spectrum is produced at the other output (9a) with respect to one of the four receivable area levels, and,
- in the broadband community antenna system mode, the twin converter (5) can be set such that the broadband frequency band spectrum is produced at one of its outputs (7a) for reception of the vertical polarization, and the broadband frequency band spectrum for reception of the horizontal polarization is produced at the other output (9a).

2. Converter according to Claim 1, **characterized in that**, in the broadband community antenna system mode, it is sufficient to supply power to the twin converter via only one output (7a or 9a), and the broadband vertical or broadband horizontal output signal, respectively, is produced at the relevant output (7a, 9a) even when a switching voltage 0 volts (9a, 7a) is produced at the respective other output.

## Revendications

1. Bi-convertisseur présentant les éléments suivants :
- aux deux sorties (7a, 9a), deux abonnés (11a, 11b) peuvent recevoir indépendamment l'un de l'autre au moins quatre plages de réception, à savoir d'une part les signaux à polarisation verticale et d'autre part les signaux à polarisation horizontale une fois dans une plage de bande de fréquence inférieure et une fois dans une plage de bande de fréquence supérieure,
**caractérisé par** les autres éléments suivants :
- le bi-convertisseur est susceptible d'être complété pour former une installation d'antenne collective à large bande, par laquelle plusieurs abonnés (11) à brancher peuvent recevoir indépendamment les uns des autres aussi bien le spectre de fréquence inférieur que le spectre de fréquence supérieur d'une part à polarisation verticale et d'autre part à polarisation horizontale,
- le bi-convertisseur (5) est conçu de telle sorte qu'en bi-fonctionnement, à l'une de ses sorties (7a) s'applique, par référence à l'un des quatre plans de plage recevables, non seulement le spectre de bande de fréquence verticale inférieure, mais la totalité du spectre de fréquence verticale à large bande, et à l'autre sortie (9a) s'applique, par référence à l'un des quatre plans de plage recevables, non seulement le spectre de bande de fréquence horizontale inférieure, mais la totalité du spectre de fréquence horizontale à large bande, et
- pendant le fonctionnement à large bande de l'installation d'antenne collective, le bi-convertisseur (5) est réglable de telle sorte qu'à l'une de ses sorties (7a) s'applique le spectre de fréquence à large bande pour recevoir la polarisation verticale, et à l'autre sortie (9a) s'applique le spectre de fréquence à large bande pour recevoir la polarisation horizontale.

2. Bi-convertisseur selon la revendication 1, **caractérisé en ce que** pendant le fonctionnement à large bande de l'installation d'antenne collective, une alimentation en énergie du bi-convertisseur via une seule sortie (7a ou 9a) suffit, et le signal de sortie vertical à large bande ou le signal de sortie horizontal à large bande s'applique à la sortie correspondante (7a, 9a) même si une tension de commutation de 0 volt s'applique à l'autre sortie concernée (9a, 7a).
